# EUROPEAN PATENT SPECIFICATION

(11) **EP 3 990 555 B1**
(45) Date of publication and mention of the grant of the patent: **11.09.2024**
(21) Application number: 20751702.0
(22) Date of filing: 11.06.2020
(51) Int. Cl.: C09D 5/00, C08K 3/00, B32B 17/10, G02B 1/04, G02B 1/10, G02B 5/00

(54) **FAINTLY-ABSORPTIVE COMPOSITE COATINGS THAT MIMIC COLORED GLASS**
LEICHT ABSORBIERENDE VERBUNDBESCHICHTUNGEN, DIE GEFÄRBTES GLAS IMITIEREN
REVÊTEMENTS COMPOSITES À ABSORPTION RAPIDE QUI IMITENT LE VERRE COLORÉ

(30) Priority: 28.06.2019 US 201962867949 P
(43) Date of publication of application: 04.05.2022
(73) Proprietor: Southwall Technologies Inc., Palo Alto, CA 94303 (US)
(72) Inventor: SINGH, Alvin, Rocklin, CA 95765 (US)
(74) Representative: Ricker, Mathias
(86) International application number: PCT/US2020/037127
(87) International publication number: WO 2020/263576

(56) References cited:
- WO-A1-2017/095469
- WO-A1-2018/057286
- WO-A1-2019/045983
- WO-A1-2019/055274
- US-A1- 2016 231 480

## Description

### FIELD OF THE INVENTION

The present invention broadly relates to optical products, and more particularly, to composite coatings that include first and second layers that each include a binding group component which together form a complementary binding group pair. The coatings are useful to mimic colored glass.

### BACKGROUND OF THE INVENTION

Color has typically been imparted to optical products such as automotive and architectural window films by use of organic dyes. Some film manufacturers have recently transitioned to using a pigmented layer on the surface of a base polymeric film for tinting a polymeric film. For example, U.S. Published Application number 2005/0019550A1 describes color-stable, pigmented optical bodies comprising a single or multiple layer core having at least one layer of an oriented thermoplastic polymer material wherein the oriented thermoplastic polymer material has dispersed within it a particulate pigment.

Highly absorptive colored films of tunable darkness and chromaticity have also been demonstrated previously using a layer-by-layer deposition technique. Thus, U.S. Pat. No. 9,453,949 discloses electromagnetic energy-absorbing optical products that include a polymeric substrate and a composite coating. The composite coating comprises a first layer comprising a polyionic binder and a second layer comprising an electromagnetic energy-absorbing insoluble particle, wherein each of said first layer and said second layer include a binding group component which together form a complementary binding group pair. Using this technique, dark coatings may be built up one layer at a time, representing a step change increase in absorption, which can be tuned by varying the number of layers. However, if a very faint coating is desirable, for example to mimic the subtle coloration of colored glass products, the layer-by-layer process has been limited on the lighter end to deposition of a single bilayer. There remains a need in the art for such an optical product with even less absorption than a single monolayer of light absorptive particles may provide.

### SUMMARY OF THE INVENTION

The present invention addresses this continuing need and achieves other good and useful benefits by providing, in one aspect, an optical product that includes a composite coating. The composite coating comprises a first layer that includes a polyionic binder, and a second layer that includes both: a) insoluble particles that absorb electromagnetic energy, and b) insoluble particles that absorb relatively little electromagnetic energy in the wavelength range of interest, specifically the wavelength range of visible light, where visible light is defined as energy with wavelengths from 400 to 700 nm. According to the invention, each of the first layer and the second layer include a binding group component which together form a complementary binding group pair. The subject-matter of the present invention is defined in claims 1-15 as attached.

### BRIEF DESCRIPTION OF THE DRAWINGS

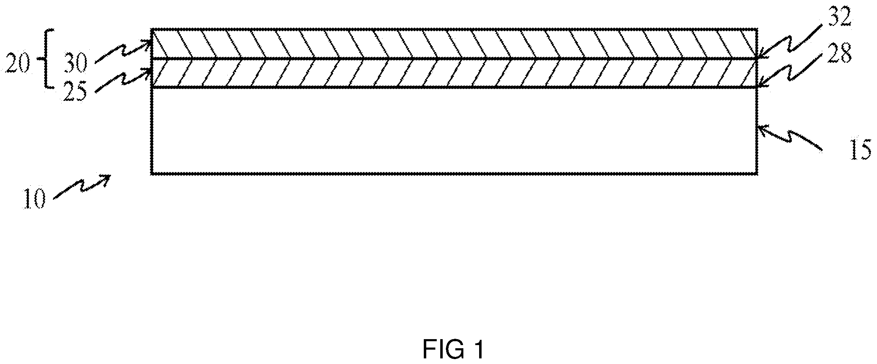

The invention will be described in further detail below and with reference to the accompanying drawings, wherein like reference numerals throughout the figures denote like elements and in wherein
Figure 1 is a schematic cross-section of an embodiment of the optical product of the present invention.
Figure 2 is a transmission/wavelength plot for the composite coatings of Examples 1-3.
Figure 3 is a transmission/wavelength plot for the composite coatings of Examples 3 and 4 and a bare substrate.

### DETAILED DESCRIPTION

In one aspect, the invention relates to an optical product that includes a substrate and a composite coating, the composite coating comprising a first layer comprising a polyionic binder, and a second layer comprising: a) insoluble particles that absorb electromagnetic energy, and b) insoluble particles that absorb relatively little visible light. According to this aspect, each of the first layer and the second layer includes a binding group component which together form a complementary binding group pair.

According the invention, the composite coating may have a total thickness of from 5 nm to 300 nm, and the first layer may be immediately adjacent to the substrate at its first face and the second layer immediately adjacent to the first layer at its opposite face.

In one aspect, the insoluble particles that absorb electromagnetic energy include a particulate pigment, the surface of which comprises a binding group component of the second layer, and in another aspect, the insoluble particles that absorb electromagnetic energy comprise a pigment, and the insoluble particles that absorb relatively little visible light comprise a metal oxide, for example one or more of silicon dioxide, titanium dioxide, cerium dioxide, zinc oxide, aluminum oxide, tin oxide, or antimony pentoxide.

In a further aspect, the insoluble particles that absorb relatively little visible light absorb less than 20% of the amount of visible light absorbed by the insoluble particles that absorb electromagnetic energy. In a further aspect, the insoluble particles that absorb relatively little visible light comprise silica particles, that may have, for example, an average primary particle size from 5 nm to 250nm. In yet another aspect, the insoluble particles that absorb electromagnetic energy have an average primary particle size from 5 nm to 500nm. In yet another aspect, the insoluble particles that absorb relatively little visible light have an average primary particle size from about 10nm to about 200nm.

In a further aspect, the optical products of the invention have a Tvis of no less than 80%. In another aspect, the substrate of the invention is a polyethylene terephthalate film that further comprises an ultraviolet absorbing material, and may be in the form, for example, of a window film.

In yet another aspect, the invention relates to methods for forming an electromagnetic energy-absorbing optical product, the methods comprising applying a first coating composition to a substrate to form a first layer, said composition comprising a polyionic binder; and applying a second coating composition atop said first layer to form a second layer, said second coating composition comprising both a) insoluble particles that absorb electromagnetic energy, and b) insoluble particles that absorb relatively little light. In this aspect, each of said first layer and said second layer include a binding group component which together form a complimentary binding group pair. In this aspect, the insoluble particles that absorb electromagnetic energy may comprise a pigment and the surface of the pigment includes the binding group component of said second layer, and the insoluble particles that absorb relatively little light may comprise a metal oxide. According to these methods, at least one of the first coating composition and the second coating composition is an aqueous dispersion or solution, and the steps may be performed at ambient temperature and pressure.

According to various aspects, the optical product may be a composite interlayer for laminated glass that may further include at least one safety film or interlayer. Similarly, the substrate may comprise a thermoplastic polyurethane and the optical product may be in the form of a paint protection film.

Thus, according to the invention, we provide a technique to deposit a self-limited monolayer of particles, but reduce the absorption of that layer to less than that of a monolayer comprised only of pigment particles by incorporating particles that absorb relatively little electromagnetic energy in the wavelength range of interest, that is, insoluble particles that absorb relatively little visible light with wavelengths from 400 to 700 nm. The invention allows for short-run, highlycustomizable film or laminated glass with very light color. This is very challenging for glass or film lines to produce in small batch sizes. This is due to the continuous large-scale operation of these types of lines. When a pigment or dye is added to glass or film, it takes a long time to adjust the continuous process and "dial in" the desired color. Once complete the equipment must be thoroughly cleaned to remove any remnant of the pigment or dye. This procedure results in a high amount of labor and low yield and therefore very high cost. The result is there is very little customization in these fields. In fact, not only does the present invention enable absorption of visible light that is less than that of a single monolayer of pigment particles, incremental increases of less than two monolayers, for example, are likewise enabled, in effect going from a digital to an analog approach with respect to selecting the amount of desired darkening.

We have previously demonstrated the ability to create a self-limited monolayer of pigment particles (US Pat. No. 9,453,949) which can be stacked serially to darken a plastic substrate uniformly. This monolayer can consist of a blend of colored particles to affect the visible color of the monolayer (US Pat. No. 9,817,166), or even the infrared absorptivity of the monolayer (US Pat. No. 9,891,357). The technique however is limited to the step change that can be created from, at the least, a single monolayer of absorptive particles. For products such as colored glass, this incremental darkening may already be too intense.

According to the invention we solve this problem by including nanoparticles in the blend which are benign absorbers or relatively weak absorbers especially in the visible region, or in the wavelength range of interest, which act as space fillers in the monolayer. In this fashion, the density and reproducibility of the monolayer is maintained, so as to create a predictable and reproducible process window for production of the coating, but the electromagnetic absorption of the monolayer is reduced.

According to the invention, an optical product is thus provided that comprises a substrate, for example polymeric or glass substrate 15 and a composite coating 20. The composite coating includes a first layer 25 and a second layer 30. Preferably the first layer 25 is immediately adjacent to said polymeric substrate 20 at its first face 28 and second layer 30 is immediately adjacent to first layer 25 at its opposite face 32. This first layer 25 includes a polyionic binder while the second layer 30 includes both a) electromagnetic energy-absorbing insoluble particles and b) particles that absorb relatively little electromagnetic energy in the wavelength range of interest, that is, the particles absorb relatively little visible light. Each layer 25 and 30 includes a binding group component with the binding group component of the first layer and the binding group component of the second layer constituting a complementary binding group pair. According to the invention the phrase "complementary binding group pair" means that as binding interaction it is electrostatic binding which is present between the binding group component of the first layer and the binding group component of the second layer of the composite coating. A "binding group component" is a chemical functionality that, in concert with a complementary binding group component, establishes one or more of the binding interactions described above. The components are complementary in the sense that binding interactions are created through their respective charges.

The first layer 25 of the composite coating includes a polyionic binder, which is defined as a macromolecule containing a plurality of either positive or negative charged moieties along the polymer backbone. Polyionic binders with positive charges are known as polycationic binders while those with negative charges are termed polyanionic binders. Also, it will be understood by one of ordinary skill that some polyionic binders can function as either a polycationic binder or a polyanionic binder depending on factors such as pH and are known as amphoteric. The charged moieties of the polyionic binder constitute the "binding group component" of the first layer.

Suitable polycationic binder examples include poly(allylamine hydrochloride), linear or branched poly(ethyleneimine), poly(diallyldimethylammonium chloride), macromolecules termed polyquaterniums or polyquats and various copolymers thereof. Blends of polycationic binders are also contemplated by the present invention. Suitable polyanionic anionic binder examples include carboxylic acid containing compounds such as poly(acrylic acid) and poly(methacrylic acid), as well as sulfonate containing compounds such as polystyrene sulfonate) and various copolymers thereof. Blends of polyanionic binders are also contemplated by the present invention. Polyionic binders of both polycationic and polyanionic types are generally well known to those of ordinary skill in the art and are described for example in U.S. Published Patent Application number US20140079884 to Krogman et al. Examples of suitable polyanionic binders include polyacrylic acid (PAA), poly(styrene sulfonate) (PSS), poly(vinyl alcohol) or poly(vinylacetate) (PVA, PVAc), poly(vinyl sulfonic acid), carboxymethyl cellulose (CMC), polysilicic acid, poly(3,4-ethylenedioxythiophene) (PEDOT) and combinations thereof with other polymers (e.g. PEDOT:PSS), polysaccharides and copolymers of the above mentioned. Other examples of suitable polyanionic binders include trimethoxysilane functionalized PAA or PAH or biological molecules such as DNA, RNA or proteins. Examples of suitable polycationic binders include poly(diallyldimethylammonium chloride) (PDAC), Chitosan, poly(allyl amine hydrochloride) (PAH), polysaccharides, proteins, linear poly(ethyleneimine) (LPEI), branched poly(ethyleneimine) BPEI and copolymers of the above-mentioned, and the like. Examples of polyionic binders that can function as either polyanionic binders or polycationic binders include amphoteric polymers such as proteins and copolymers of the above mentioned polycationic and polyanionic binders.

The concentration of the polyionic binder in the first layer may be selected based in part on the molecular weight of its charged repeat unit but will typically be between 0.1 mM - 100 mM, more preferably between 0.5 mM and 50mM and most preferably between 1 and 20 mM based on the molecular weight of the charged repeat unit comprising the first layer. Preferably the polyionic binder is a polycation binder and more preferably the polycation binder is polyallylamine hydrochloride. Most preferably the polyionic binder is soluble in water and the composition used to form the first layer is an aqueous solution of polyionic binder. In an embodiment wherein the polyionic binder is a polycation and the first layer is formed from an aqueous solution, the pH of the aqueous solution is selected so that from 5 to 95%, preferably 25 to 75% and more preferably approximately half of the ionizable groups are protonated. Other optional ingredients in the first layer include biocides or shelf-life stabilizers.

The second layer 30 of the composite coating 20 includes both electromagnetic energy-absorbing insoluble particles, also described herein as insoluble particles that absorb electromagnetic energy, and insoluble particles that absorb relatively little electromagnetic energy in the wavelength range of interest, that is, insoluble particles that absorb relatively little visible light. The phrase "electromagnetic energy-absorbing" means that the particle is purposefully selected as a component for the optical product for its preferential absorption at particular spectral wavelength(s) or wavelength ranges(s). The term "insoluble" is meant to reflect the fact that the particle does not substantially dissolve in the composition used to form the second layer 30 and exists as a particle in the optical product structure. The electromagnetic energy-absorbing insoluble particle is preferably a visible electromagnetic energy absorber, such as a pigment; however, insoluble particles such as UV absorbers or IR absorbers, or absorbers in various parts of the electromagnetic spectrum, that do not necessarily exhibit color are also within the scope of the present invention. The electromagnetic energy-absorbing particle is preferably present in the second layer in an amount of from 30% to 60% by weight based on the total weight of the second layer.

In order to achieve the desired final electromagnetic energy absorption level, the second layer may be formed from a composition that includes a total amount of particles in the amount from about 0.25 to 2 weight percent based on the total weight of the composition. The insoluble particles that absorb electromagnetic energy may be present, based on the total amount of particles in the second layer, in an amount from about 10% to about 90% by weight, or preferably from 25% to 75%, or more preferably from 25% to 50%.

Pigments suitable for use as the electromagnetic energy-absorbing insoluble particle in a preferred embodiment of the second layer are preferably particulate pigments with an average particle diameter of between 5 and 300 nanometers, more preferably between 10 and 150 nanometers, often referred to in the art as nanoparticle pigments. Even more preferably, the surface of the pigment includes the binding group component of the second layer. Suitable pigments are available commercially as colloidally stable water dispersions from manufacturers such as Cabot, Clariant, DuPont, Dainippon and DeGussa. Particularly suitable pigments include those available from Cabot Corporation under the Cab-O-Jet^{®} name, for example 250C (cyan), 265M (magenta), 270Y (yellow) or 352K (black). In order to be stable in water as a colloidal dispersion, the pigment particle surface is typically treated to impart ionizable character thereto and thereby provide the pigment with the desired binding group component on its surface. It will be understood by ordinary skill that commercially available pigments are sold in various forms such as suspensions, dispersions and the like, and care should be taken to evaluate the commercial form of the pigment and modify it as/if necessary to ensure its compatibility and performance with the optical product components, particularly in the embodiment wherein the pigment surface also functions as the binding group component of the second layer.

Multiple pigments may be utilized in the second layer to achieve a specific hue or shade or color in the final product; however, it will again be understood by ordinary skill that, should multiple pigments be used, they should be carefully selected to ensure their compatibility and performance both with each other and with the optical product components. This is particularly relevant in the embodiment wherein the pigment surface also functions as the binding group component of the second layer, as for example particulate pigments can exhibit different surface charge densities due to different chemical modifications that can impact compatibility.

The second layer of the composite coating of the present invention further comprises insoluble particles that absorb relatively little electromagnetic energy in the wavelength range of interest, that is, they absorb relatively little visible light. When we refer to the wavelength range of interest, or visible light, we refer generally to a wavelength range of from about 400 nm to about 700 nm, or more specifically from 400nm to 700nm as measured using a visible spectrophotometer. Those skilled in the art will readily comprehend that the particles and amounts may be selected based on the desired behavior of the layer.

When we say that these insoluble particles absorb relatively little visible light, we mean that they absorb less than 30% of the amount of visible light that the insoluble particles that absorb electromagnetic energy absorb in the wavelength range of visible light, or less than 25%, or less than 10%, or even less than 5% of the amount of electromagnetic energy that the insoluble particles that absorb electromagnetic energy absorb. This absorption of visible light may be measured using a visible spectrophotometer in accordance with ASTM standard E169-16.

These amounts are not seen to be critical and are based on a comparison of the amounts of absorption measured for equal weights of each of the two types of particles. Those skilled in the art will understand that the amount of visible light absorption of the particles will vary based on a number of factors, including size, shape, and color. What is important is that the insoluble particles that absorb relatively little visible light are present in an amount sufficient to obtain the desired effect, that is, to reduce the overall amount of visible light absorption in the second layer.

Any generally non-visible absorbing nanoparticles can be employed according to the invention as the insoluble particles that absorb relatively little visible light. Examples of suitable particles that absorb relatively little visible light include metal oxide nanoparticles such as silicon dioxide (silica), titanium dioxide, cerium dioxide, zinc oxide, aluminum oxide, tin oxide, or antimony pentoxide. Those skilled in the art understand that the precise stoichiometry of these oxides is not critical and that the ratio of silicon atoms to oxygen atoms present in silica, for example, need not be precisely 1:2. Preferably the selected particle has a primary particle size of less than 250nm or less than 200nm or less than 100 nm, or from 5 nm to 250nm, or from 10 nm to 200 nm, or from 50 nm to 150nm. The particle should be colloidal dispersed in water, for example free of surfactant additives or dispersants.

In one aspect, then the invention relates to the use of insoluble particles that absorb relatively little visible light and electromagnetic energy-absorbing insoluble particles. Preferably the second layer of the composite coating further includes a screening agent. A "screening agent" is defined as an additive that promotes even and reproducible deposition of the second layer via improved dispersion of the electromagnetic energy-absorbing insoluble particle within the second layer by increasing ionic strength and reducing interparticle electrostatic repulsion. Screening agents are generally well known to those of ordinary skill in the art and are described for example in U.S. Published Patent Application number US20140079884 to Krogman et al. Examples of suitable screening agents include any low molecular weight salts such as halide salts, sulfate salts, nitrate salts, phosphate salts, fluorophosphate salts, and the like. Examples of halide salts include chloride salts such as LiCI, NaCl, KCI, CaCl₂, MgCl₂, NH₄Cl and the like, bromide salts such as LiBr, NaBr, KBr, CaBr₂, MgBr₂, and the like, iodide salts such as Lil, Nal, KI, CaI₂, MgI₂, and the like, and fluoride salts such as, NaF, KF, and the like. Examples of sulfate salts include Li₂SO₄, Na₂SO₄, K₂SO₄, (NH₄)₂SO₄, MgSO₄, CoSO₄, CuSO₄, ZnSO₄, SrSO₄, Al₂(SO₄)₃, and Fe₂(SO₄)₃. Organic salts such as (CH₃)₃CCl, (C₂H₅)₃CCl, and the like are also suitable screening agents. Sodium chloride is typically a preferred screening agent based on ingredient cost. The presence and concentration level of a screening agent may allow for higher loadings of the electromagnetic energy-absorbing insoluble particle such as those that may be desired in optical products with a Tᵥᵢₛ of no more than 50% and also may allow for customizable and carefully controllable loadings of the electromagnetic energy-absorbing insoluble particle to achieve customizable and carefully controllable optical product Tᵥᵢₛ levels.

Suitable screening agent concentrations can vary with salt identity and are also described for example in U.S. Published Patent Application number US20140079884 to Krogman et al. In some embodiments, the screening agent concentration can range between 1 mM and 1000 mM or between 10 mM and 100 mM or between 30 mM and 80 mM. In some embodiments the screening agent concentration is greater than 1 mM, 10 mM, 100 mM or 500 mM.

The second layer of the composite coating may also contain other ingredients such as biocides or shelf-life stabilizers.

In some embodiments, the optical product of the present invention may include a plurality of composite coatings. For example, the optical product may include a first and a second composite coating, each with a first layer and second layer, i.e. a first composite coating including a first layer and a second layer, and a second composite coating including a first layer and a second layer. This depiction is not intended to be limiting in any way on the possible number of composite coatings and one of ordinary skill will appreciate that this depiction is simply exemplary and illustrative of an embodiment with multiple or a plurality of composite coatings. However, those skilled in the art will appreciate that the present invention is especially beneficial when a single bilayer composite coating is used, and in one embodiment, the composite coating comprises a single bilayer comprised of the first and second layers. In another embodiment, multiple composite coatings may be provided, each of which may have a substantial amount of particles that absorb relatively little visible light, providing what may be described as analog control over the level of darkening, in contrast to a binary approach in which only visible-light blocking particles or pigments are used.

Those skilled in the art will readily appreciate that the composite coatings of the present invention may likewise be deposited directly on the substrate, or the composite coatings of the present invention may be placed, for example, between bilayers such as those previously described in which only light-blocking particles are used, to obtain an incremental darkening that was heretofore unachievable.

For embodiments with a plurality of composite coatings, it will be appreciated that the electromagnetic energy-absorbing insoluble particle for the second layer in each composite coating may be independently selected and that the second layers will in combination provide an additive effect on the electromagnetic energy-absorbing character and effect of the electromagnetic energy-absorbing optical product. This means that the second layer of a first composite coating and the second layer of a second composite coating in combination may provide an additive effect on the electromagnetic energy-absorbing character and effect of the electromagnetic energy-absorbing optical product. This additive effect can be customized and carefully controlled in part by the concentration of the electromagnetic energy-absorbing particle in each second layer as dispersed through the presence of the screening agent. For example, in an embodiment wherein the electromagnetic energy-absorbing particle is a pigment, the second layers will in combination provide an additive effect on the visually perceived color of said electromagnetic energy-absorbing optical film product. In this embodiment, the pigments for each second layer may be of the same or similar composition and/or color such that the additive effect is to increase intensity or depth or darkness of the visually perceived color of the optical product or, stated another way, to reduce electromagnetic transmittance in the visible wavelength range (or Tᵥᵢₛ). In another embodiment, carbon black is used as the pigment for at least one second layer and pigments such as those listed above are used as pigments for the other second layer(s) such that the additive effect is a visually perceived darkened color, also reducing electromagnetic transmittance in the visible wavelength range (or Tᵥᵢₛ). As discussed above, the present invention may be useful in products wherein relatively low levels of darkening are desired. Accordingly, in an embodiment, the optical products of the present invention have a Tᵥᵢₛ of no less than 70%, or no less than 80%, or no less than 90%. In yet another embodiment, the pigments for each second layer may be of complementary composition and/or color such that the additive effect is a visually perceived color different from and formed by their combination of the individual pigments, for example an additive perceived "green" color achieved by utilizing a blue pigment for one second layer and a yellow pigment for another second layer.

The substrate may in the broadest sense, be any substrate known in the art as useable as an optical product component, for example polymeric substrate 15. In addition to a variety of polymers as described herein, and especially PET, thermoplastic polyurethane (TPU), and PVB, the substrate may alternatively be glass, and the composite coating of the invention may, in that embodiment, be deposited directly on the glass substrate. Alternatively, the substrate may be a metal or the like, such as steel, copper, aluminum or the like, which may be coated or treated prior to the composite coating being applied. A suitable polymeric substrate is typically a flexible polymeric film, for example a polyethylene terephthalate (PET) film of a thickness of between 12µ and 375µ. As prior art optical products employing dyes exhibit a variety of drawbacks, the polymeric substrate is most preferably an undyed transparent polyethylene terephthalate film. The polymeric substrate may further include additives known in the art to impart desirable characteristics. A particular example of such an additive is an ultraviolet (UV) absorbing material such as a benzotriazole, hydroxybenzophenones or triazines. A useful polymeric substrate with a UV absorbing additive incorporated therein is described in U.S. Patent No. 6,221,112, originally assigned to a predecessor assignee of the present invention.

In one embodiment, wherein the polymeric substrate is a flexible polymeric film such as PET, the optical product may be an automotive or architectural window film. As well known in the art, conventional window films are designed and manufactured with levels of electromagnetic energy transmittance or reflectivity that are selected based on a variety of factors such as for example product end use market application and the like. In one embodiment, the optical product of the present invention has visible light transmittance or Tᵥᵢₛ of no less than 50%, preferably no less than 70% and more preferably no less than 80%, or no less than 90%. Such levels of visible light transmittance are often desired in window films with low levels of darkening for certain automotive end use applications such as aesthetic windscreens and sidelights. In another embodiment, the optical product of the present invention has visible light transmittance or Tᵥᵢₛ of from 80 to 99%, or from 80 to 95%, or from 85 to 92%. Such levels of visible light transmittance are often desired in window films with relatively moderate to low levels of darkening (typically also with infrared absorption) for (to the extent permitted by governmental regulation) certain automotive end use applications such as windscreens. In yet another embodiment, the optical product of the present invention has visible light transmittance or Tᵥᵢₛ of no less than 85%, preferably no less than 88% and more preferably no less than 90%. Such levels of visible light transmittance are often desired in window films with low to minimal levels of darkening for certain architectural end use applications.

The window films may optionally include layers or coatings known to those of ordinary skill in the window film art. Coatings for example may include protective hardcoats, scratch-resist or "SR" coats, adhesive layers, protective release liners and the like. Layers may include for example metallic layers applied by sputtering or other known techniques. Such layers or coatings may be components of the polymeric substrate. Further, the polymeric substrate may be a laminated or multilayer structure.

In an embodiment wherein the polymeric substrate is a flexible polymeric film such as PET, TPU, or PVB, the optical product may be a composite interlayer for laminated glass and may further include at least one safety film or interlayer, or the composite coating may be applied directly on the PVB interlayer. The safety film may be formed from film-forming materials known in the art for this purpose, including for example plasticized polyvinyl butyral (PVB), polyurethanes, polyvinyl chloride, polyvinyl acetal, polyethylene, ethyl vinyl acetates and the like. Preferred safety film is a plasticized PVB film or interlayer commercially available from Eastman Chemical Company as SAFLEX^{®} PVB interlayer. Preferably, the composite interlayer includes two safety films or one film layer and one coating layer, such as a PVB coating that comprises or encapsulates the polymeric substrate. Composite interlayers of this general type are known in the art and are described for example in U.S. Patent Nos. 4,973,511 and 5,091,258, the contents of which are incorporated herein by reference. Alternatively, the composite coating of the invention may be deposited directly on PVB, and the PVB afterward used in conventional laminated glass applications. As a further alternative, the composite coating of the invention may be deposited directly on glass, as described herein, or on TPUs such as those used in paint protection films.

In another aspect, the present invention is directed to a method for forming an electromagnetic energy-absorbing optical product. The method of present invention includes (a) applying a first coating composition to a substrate to form a first layer and (b) applying a second coating composition atop said first layer to form a second layer, said first layer and said second layer together constituting a composite coating. The first coating composition includes a polyionic binder and the second coating composition includes at least one electromagnetic energy-absorbing insoluble particle and at least one particle that absorbs relatively little visible light, and each of said first and second coating compositions include a binding group component which together form a complementary binding group pair. The second coating composition preferably includes a screening agent as defined above.

In a preferred embodiment, at least one of the first and second coating compositions are an aqueous dispersion or solution and most preferably both of the first and second coating compositions are an aqueous dispersion or solution. In this embodiment, both applying steps (a) and (b) are performed at ambient temperature and pressure.

The optical products of the present invention are preferably manufactured using known "layer-by-layer" (LbL) processes such as described in Langmuir, 2007, 23, 3137-3141 or in U.S. Patent Nos. 8,234,998 and 8,689,726 and U.S, Published Application US 20140079884, co-invented by co-inventor Krogman of the present application, the disclosures of which are incorporated herein by reference.

The following examples, while provided to illustrate with specificity and detail the many aspects and advantages of the present invention, are not be interpreted as in any way limiting its scope. Variations, modifications and adaptations which do depart of the spirit of the present invention will be readily appreciated by one of ordinary skill in the art.

### Example 1

To form the optical product, a sheet of polyethylene terephthalate (PET) film (as substrate) with a thickness of 75 microns was pretreated as known in the art by passing through a conventional corona treatment. A first layer was then formed on the PET sheet by spray coating, at ambient pressure and temperature, a first coating composition of 10 mM solution, based on the molecular weight of the charged repeat unit, of polyallylamine hydrochloride with an adjusted pH of 9.5. Excess non-absorbed material was rinsed away with a deionized water spray. A composition for use in forming the second layer was then sprayed onto the surface of the first layer with excess material again rinsed away in a similar fashion with the first layer and electromagnetic energy-absorbing particle-containing second layer constituting the composite color coating.

In this example a first coating composition for the first layer of the optical product was formed by dissolving 0.92g of poly(allylamine hydrochloride) per liter of deionized water, and titrating the pH of the resulting solution to 9.5 using sodium hydroxide. A second coating composition for forming the second layer of a colored composite layer, a 0.35 wt% solids pigment dispersion of 35g Cab-o-Jet 250C cyan pigment in 1L of distilled water was also formed, with 2.92g of sodium chloride added as screening agent to ionically screen the colloidal particles and prepare them for deposition. The above procedure was then utilized to form an optical product with the first layer from the first composition above and a second layer formed from the pigment-containing second coating composition described above. Upon completion of one alternation, the substrate was dried by forced air convection

### Example 2

Using the same first coating composition from Example 1, an optical product was created by replacing the second coating composition with a dispersion containing 35g Cab-o-Jet 265M magenta pigment in 1L of distilled water along with 2.92g of sodium chloride added as screening agent.

### Example 3

Using the same first coating composition from Example 1, an optical product was created by replacing the second coating composition with a dispersion containing 17.5g Cab-o-Jet 250C cyan pigment and 17.5g Cab-o-Jet 265M magenta pigment in 1L of distilled water along with 2.92g of sodium chloride added as screening agent. This optical product contained a blend of cyan and magenta pigment particles, with approximately the same packing density as the monolayer created in Examples 1 and 2.

### Example 4

Using the same first coating composition from Example 1, an optical product was created by replacing the second coating composition with a dispersion containing 17.5g Cab-o-Jet 250C cyan pigment, 17.5g Cab-o-Jet 265M magenta pigment and 1g of Ludox AS-40 colloidal silica in 1L of distilled water along with 2.92g of sodium chloride added as screening agent. This optical product contained a blend of cyan and magenta pigment particles as well as non-absorptive silica particles, with essentially the same packing density as the monolayer created in Examples 1 and 2.

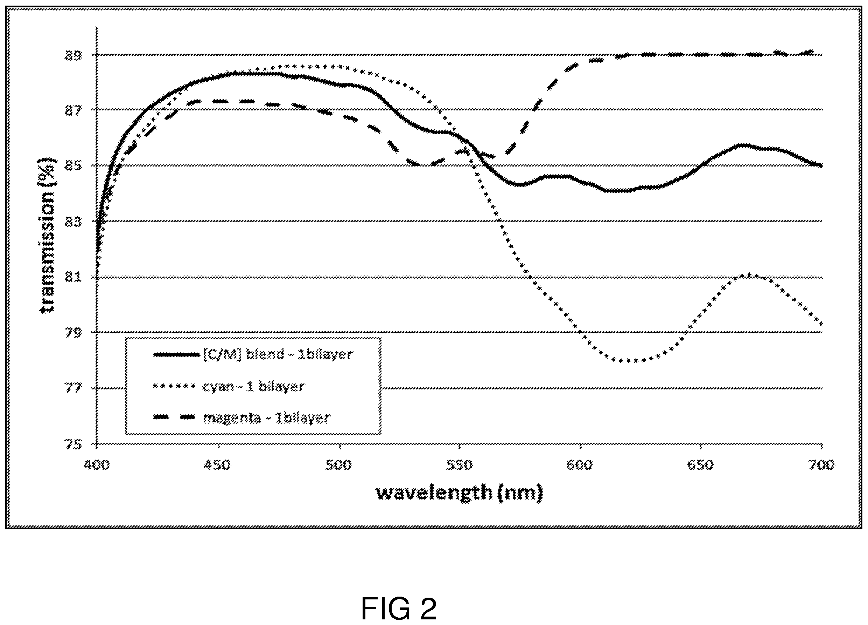

The UV-vis transmission spectra of each of the four optical products created above, as well as the bare PET substrate referenced in Example 1 are as follows. The single bilayer of pure cyan (Ex 1), pure magenta (Ex 2), and blended cyan/magenta (Ex 3) can be seen in Fig 2, where the darkening effect of the single blended bilayer is already clearly too strong for a colored glass application.

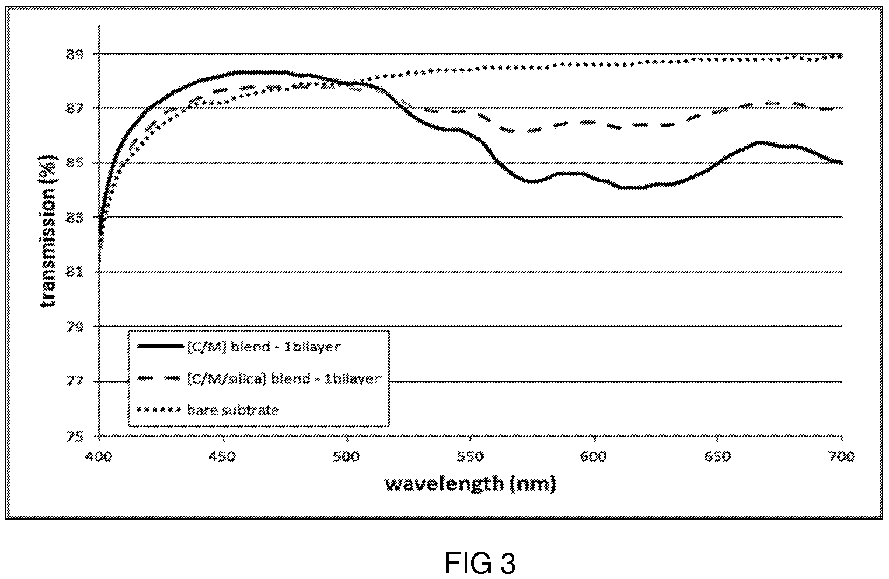

The visible transmission challenge is solved by applying a less absorptive single bilayer. In Fig 3, the visible transmission of the blended bilayer containing only cyan and magenta (Ex 3) is compared to that of the single bilayer containing cyan, magenta, and non-absorptive silica (Ex 4).

The absorption intensity from a single bilayer of coating is thus reduced without sacrificing the density and reproducibility of the coating. In this way, partial bilayers (or bilayers which absorb a fraction of the light that a typical bilayer would) can be created, lifting the restriction that layer-by-layer coatings must be applied in discrete jumps of absorbance.

The foregoing description of various embodiments of the invention has been presented for purposes of illustration and description. It is not intended to be exhaustive or to limit the invention to the precise embodiments disclosed. Numerous modifications or variations are possible in electromagnetic energy of the above teachings. The embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims.

## Claims

1. An optical product comprising:
a substrate; and
a composite coating, the composite coating comprising:
i. a first layer comprising a polyionic binder, and
ii. a second layer comprising: a) insoluble particles that absorb electromagnetic energy, and b) insoluble particles that absorb relatively little visible light, that is, they absorb less than 30% of the amount of visible light that the insoluble particles a) that absorb electromagnetic energy absorb in the visible light in the range of from 400 nm to 700 nm,
wherein each of said first layer and said second layer includes a binding group component which together form a complementary binding group pair by electrostatic binding,
wherein the insoluble particles a) that absorb electromagnetic energy comprise a pigment, and the insoluble particles b) that absorb relatively little visible light comprise a metal oxide, preferably one or more of silicon dioxide, titanium dioxide, cerium dioxide, zinc oxide, aluminum oxide, tin oxide, or antimony pentoxide.

2. The optical product of claim 1 wherein the composite coating has a total thickness of 5 nm to 300 nm.

3. The optical product of claim 1 wherein the first layer is immediately adjacent to the substrate at its first face and the second layer is immediately adjacent to the first layer at its opposite face.

4. The optical product of claim 1 wherein the insoluble particles that absorb electromagnetic energy include a particulate pigment, the surface of which comprises a binding group component of the second layer.

5. The optical product of claim 1, wherein the insoluble particles that absorb relatively little visible light absorb less than 20% of the amount of visible light absorbed by the insoluble particles that absorb electromagnetic energy.

6. The optical product of claim 1, wherein the insoluble particles that absorb relatively little visible light comprise silica particles; preferably
wherein the silica particles have an average primary particle size from 5 nm to 250nm.

7. The optical product of claim 1, wherein the insoluble particles that absorb electromagnetic energy have an average primary particle size from 5 nm to 500nm; or
wherein the insoluble particles that absorb relatively little visible light have an average primary particle size from about 10nm to about 200nm.

8. The optical product of claim 1 wherein said optical product has a Tvis of no less than 80%.

9. The optical product of claim 1 wherein the substrate is a polyethylene terephthalate film that further comprises an ultraviolet absorbing material.

10. The optical product of claim 1 wherein said optical product is in the form of a window film.

11. A method for forming an electromagnetic energy-absorbing optical product, said method comprising:
applying a first coating composition to a substrate to form a first layer, said composition comprising a polyionic binder; and
applying a second coating composition atop said first layer to form a second layer, said second coating composition comprising: a) insoluble particles that absorb electromagnetic energy comprising a pigment, and b) insoluble particles comprising a metal oxide that absorb relatively little visible light, that is, they absorb less than 30% of the amount of visible light that the insoluble particles a) that absorb electromagnetic energy absorb in the visible light in the range of from 400 nm to 700 nm,
wherein each of said first layer and said second layer include a binding group component which together form a complimentary binding group pair by electrostatic binding.

12. The method of claim 11 wherein at least one of said first coating composition and said second coating composition is an aqueous dispersion or solution.

13. The method of claim 11 wherein applying steps a) and b) are performed at ambient temperature and pressure.

14. The optical product of claim 1 wherein said optical product is a composite interlayer for laminated glass and further includes at least one safety film or interlayer.

15. The optical product of claim 1, wherein the substrate comprises a thermoplastic polyurethane and optical product is in the form of a paint protection film.

## Patentansprüche

1. Ein optisches Produkt aufweisend:
ein Substrat; und
eine Kompositbeschichtung, die Kompositbeschichtung aufweisend:
i. eine erste Schicht aufweisend ein polyionisches Bindemittel, und
ii. eine zweite Schicht aufweisend: a) unlösliche Partikel welche elektromagnetische Energie absorbieren, und b) unlösliche Partikel welche relativ wenig sichtbares Licht absorbieren, das heißt, sie absorbieren weniger als 30% der Menge des sichtbaren Lichts, welches die unlöslichen Partikel a) welche elektromagnetische Energie absorbieren im Bereich von 400 nm bis 700 nm des sichtbaren Lichts absorbieren,
wobei jede der besagten ersten Schicht und der besagten zweiten Schicht eine Bindungsgruppen-Komponente umfasst, welche zusammen ein gegensätzliches Bindungsgruppenpaar durch elektrostatische Wechselwirkung bilden,
wobei die unlöslichen Partikel a) welche elektromagnetische Energie absorbieren ein Pigment aufweisen, und die unlöslichen Partikel b) die relativ wenig sichtbares Licht absorbieren ein Metalloxid aufweisen, bevorzugt eines oder mehrere aus Siliziumdioxid, Titandioxid, Cerdioxid, Zinkoxid, Aluminiumoxid, Zinnoxid, oder Antimonpentoxid.

2. Optisches Produkt nach Anspruch 1, wobei die Kompositbeschichtung eine gesamte Dicke von 5 nm bis 300 nm besitzt.

3. Optisches Produkt nach Anspruch 1, wobei die erste Schicht direkt angrenzend ist an das Substrat auf seiner ersten Seite und die zweite Schicht direkt angrenzend ist an die erste Schicht auf der gegenüberliegenden Seite.

4. Optisches Produkt nach Anspruch 1, wobei die unlöslichen Partikel welche elektromagnetische Energie absorbieren ein partikuläres Pigment umfassen, wobei dessen Oberfläche eine Bindungsgruppenkomponente der zweiten Schicht aufweist.

5. Optisches Produkt nach Anspruch 1, wobei die unlöslichen Partikel welche relativ wenig sichtbares Licht absorbieren 20% der Menge an sichtbarem Licht, welches absorbiert wird durch die unlöslichen Partikel welche elektromagnetische Energie absorbieren, weniger absorbieren.

6. Optisches Produkt nach Anspruch 1, wobei die unlöslichen Partikel welche relativ wenig sichtbares Licht absorbieren Silica-Partikel aufweisen, wobei bevorzugt die Silica-Partikel eine durchschnittliche primäre Partikelgröße von 5 bis 250 nm haben.

7. Optisches Produkt nach Anspruch 1, wobei die unlöslichen Partikel welche elektromagnetische Energie absorbieren eine durchschnittliche primäre Partikelgröße von 5 nm bis 500 nm besitzen; oder
wobei die unlöslichen Partikel welche relativ wenig sichtbares Licht absorbieren eine durchschnittliche primäre Partikelgröße von etwa 10 nm bis etwa 200 nm besitzen.

8. Optisches Produkt nach Anspruch 1, wobei besagtes optisches Produkt eine Tvis von nicht weniger als 80% besitzt.

9. Optisches Produkt nach Anspruch 1, wobei das Substrat eine Polyethylenterephthalat Folie ist, welche weiterhin ein ultraviolett-absorbierendes Material aufweist.

10. Optisches Produkt nach Anspruch 1, wobei besagtes optisches Produkt in Form einer Fensterfolie ist.

11. Ein Verfahren zur Bildung eines elektromagnetische Energie-absorbierenden optischen Produkts, besagtes Verfahren aufweisend:
Aufbringen einer ersten Beschichtungszusammensetzung auf einem Substrat zum Bilden einer ersten Schicht, besagte Zusammensetzung aufweisend ein polyionisches Bindemittel; und
Aufbringen einer zweiten Beschichtungszusammensetzung auf die besagte erste Schicht zum Bilden einer zweiten Schicht, besagte zweite Beschichtungszusammensetzung aufweisend: a) unlösliche Partikel welche elektromagnetische Energie absorbieren aufweisend ein Pigment, und b) unlösliche Partikel aufweisend ein Metalloxid welche relativ wenig sichtbares Licht absorbieren, das heißt, sie absorbieren weniger als 30% der Menge des sichtbaren Lichts, welches die unlöslichen Partikel a) welche elektromagnetische Energie absorbieren im Bereich von 400 nm bis 700 nm des sichtbaren Lichts absorbieren,
wobei jede der besagten ersten Schicht und der besagten zweiten Schicht eine Bindungsgruppenkomponente umfasst, welche zusammen ein gegensätzliches Bindungsgruppenpaar durch elektrostatische Wechselwirkung bilden.

12. Verfahren nach Anspruch 11, wobei mindestens eine der besagten ersten Beschichtungszusammensetzung und besagten zweiten Beschichtungszusammensetzung eine wässrige Dispersion oder Lösung ist.

13. Verfahren nach Anspruch 11, wobei das Anwenden der Schritte a) und b) bei Raumtemperatur und Normaldruck durchgeführt wird.

14. Optisches Produkt nach Anspruch 1, wobei besagtes optisches Produkt eine Kompositzwischenschicht für Verbundsicherheitsglas ist und weiterhin mindestens eine Sicherheitsfolie oder -zwischenschicht umfasst.

15. Optisches Produkt nach Anspruch 1, wobei das Substrat ein thermoplastisches Polyurethan aufweist und das optische Produkt in Form einer Farbschutzfolie ist.

## Revendications

1. Produit optique comprenant :
un substrat ; et
un revêtement composite, le revêtement composite comprenant :
i. une première couche comprenant un liant polyionique ; et
ii. une deuxième couche comprenant : a) des particules insolubles qui absorbent l'énergie électromagnétique, et b) des particules insolubles qui absorbent relativement peu de lumière visible, c'est-à-dire qu'elles absorbent moins de 30 % de la quantité de lumière visible que les particules insolubles a) qui absorbent l'énergie électromagnétique absorbent dans la lumière visible dans la plage de 400 nm à 700 nm,
dans lequel chacune de ladite première couche et de ladite deuxième couche comprend un composant groupe de liaison formant ensemble une paire de groupes de liaison complémentaires par liaison électrostatique,
dans lequel les particules insolubles a) qui absorbent l'énergie électromagnétique comprennent un pigment, et les particules insolubles b) qui absorbent relativement peu de lumière visible comprennent un oxyde métallique, préférentiellement un ou plus parmi le dioxyde de silicium, le dioxyde de titane, le dioxyde de cérium, l'oxyde de zinc, l'oxyde d'aluminium, l'oxyde d'étain ou le pentoxyde d'antimoine.

2. Produit optique selon la revendication 1, dans lequel le revêtement composite a une épaisseur totale de 5 nm à 300 nm.

3. Produit optique selon la revendication 1 dans lequel la première couche est immédiatement adjacente au substrat au niveau de sa première face et la deuxième couche est immédiatement adjacente à la première couche au niveau de sa face opposée.

4. Produit optique selon la revendication 1, dans lequel les particules insolubles qui absorbent l'énergie électromagnétique incluent un pigment particulaire dont la surface comprend un composant groupe de liaison de la deuxième couche.

5. Produit optique selon la revendication 1, dans lequel les particules insolubles qui absorbent relativement peu de lumière visible absorbent moins de 20 % de la quantité de lumière visible absorbée par les particules insolubles qui absorbent l'énergie électromagnétique.

6. Produit optique selon la revendication 1, dans lequel les particules insolubles qui absorbent relativement peu de lumière visible comprennent des particules de silice ; préférentiellement
dans lequel les particules de silice ont une taille moyenne de particules primaires de 5 nm à 250 nm.

7. Produit optique selon la revendication 1, dans lequel les particules insolubles qui absorbent l'énergie électromagnétique ont une taille moyenne de particules primaires de 5 nm à 500 nm ; ou
dans lequel les particules insolubles qui absorbent relativement peu de lumière visible ont une taille moyenne de particules primaires d'environ 10 nm à environ 200 nm.

8. Produit optique selon la revendication 1 dans lequel ledit produit optique a une Tvis supérieure ou égale à 80 %.

9. Produit optique selon la revendication 1 dans lequel le substrat est un film de poly(téréphtalate d'éthylène) qui comprend en outre un matériau absorbant le rayonnement ultraviolet.

10. Produit optique selon la revendication 1, dans lequel ledit produit optique est sous la forme d'un film de fenêtre.

11. Procédé de formation d'un produit optique absorbant l'énergie électromagnétique, ledit procédé comprenant :
l'application d'une première composition de revêtement sur un substrat afin de former une première couche, ladite composition comprenant un liant polyionique ; et
l'application d'une deuxième composition de revêtement au-dessus de ladite première couche afin de former une deuxième couche, ladite deuxième composition de revêtement comprenant : a) des particules insolubles qui absorbent l'énergie électromagnétique comprenant un pigment, et b) des particules insolubles comprenant un oxyde métallique qui absorbent relativement peu de lumière visible, c'est-à-dire qu'elles absorbent moins de 30 % de la quantité de lumière visible que les particules insolubles a) qui absorbent l'énergie électromagnétique absorbent dans la lumière visible dans la plage de 400 nm à 700 nm,
dans lequel chacune de ladite première couche et de ladite deuxième couche comprend un composant groupe de liaison formant ensemble une paire de groupes de liaison complémentaires par liaison électrostatique.

12. Procédé selon la revendication 11, dans lequel au moins l'une de ladite première composition de revêtement et de ladite deuxième composition de revêtement est une solution ou dispersion aqueuse.

13. Procédé selon la revendication 11, dans lequel l'application des étapes a) et b) est effectuée à température ambiante et à pression atmosphérique.

14. Produit optique selon la revendication 1 dans lequel ledit produit optique est un intercalaire composite pour verre feuilleté et comprend en outre au moins un film de sécurité ou un intercalaire.

15. Produit optique selon la revendication 1, dans lequel le substrat comprend un polyuréthane thermoplastique et le produit optique est sous la forme d'un film de protection de peinture.
